# EUROPEAN PATENT APPLICATION

(11) **EP 4 768 217 A1**
(43) Date of publication of application: **01.07.2026**
(21) Application number: 25223206.1
(22) Date of filing: 15.12.2025
(51) Int. Cl.: B29C 44/14, B29C 44/44, B29C 45/14, B29C 44/12, B29C 70/08, B29C 70/84, B29D 99/00, B29C 44/34

(54) **SUSTAINABLE AND RECYCLED HYBRID SANDWICH STRUCTURES**

(30) Priority: 30.12.2024 US 202419005294
(71) Applicant: Volkswagen Aktiengesellschaft, 38440 Wolfsburg (DE)
(72) Inventor: Handtke, Sören, 38440 Wolfsburg (DE); Kardos, Marton, 38440 Wolfsburg (DE)

(57) **Abstract**

Example approaches are disclosed for manufacturing fiber reinforced parts. A mixture of a fibrous material and a matrix material is consolidated into skin layers each of which represents an individual skin layer. Portions of a core structure material are injected into a mold in which at least one of the skin layers is placed. The portions of the core structure material are fused with the at least one of the skin layers to create a part with a hybrid structure.

## Description

### TECHNICAL FIELD

Embodiments relate generally to manufacturing processes, and, more specifically, to sustainable and recycled hybrid sandwich structures including but not limited to those with a thermoplastic particle foam core and a natural fiber reinforced skin.

### BACKGROUND OF THE INVENTION

A vehicle or many parts therein may be made of a myriad of materials such as steel, aluminum, plastics, and composite materials. Transforming these materials into final spatial forms (or net-shapes) with suitable physical properties to be used in the vehicle may take a number of manufacturing steps, generate much waste, and consume a significant amount of energy, time and labor.

For example, existing particle foam technologies do not support easy integration of skin structures and hybrid materials. As a result, hybrid sandwich structures are typically made from different materials bonded with adhesives, resulting in making the hybrid sandwich structures difficult and costly to recycle. This issue is particularly prevalent in hybrid sandwich structures with fiber-reinforced composite skin layers. In addition to the recyclability issue, producing components with hybrid sandwich structures often requires extra manufacturing steps, leading to increased material waste. Thus, there is a need for new manufacturing processes that enable the creation of sustainable, recyclable hybrid sandwich structures, suitable for a wide range of industries, including vehicle manufacturing.

### BRIEF DESCRIPTION OF DRAWINGS

The present disclosure is illustrated by way of example, and not by way of limitation, in the figures of the accompanying drawings and in which like reference numerals refer to similar elements and in which:
FIG. 1 illustrates an example process flow for producing fiber-reinforced composite;
FIG. 2A illustrates example operations of manufacturing skin layers; FIG. 2B illustrates example operations of placing and injecting skin layers and a core material into a tool or mold; FIG. 2C illustrates example operations of fusing skin layers and a core material;
FIG. 3A and FIG. 3B illustrate example hybrid fiber-reinforced structures; and
FIG. 4 illustrates an example process flow for producing fiber-reinforced composite components or parts.

### DETAILED DESCRIPTION OF THE INVENTION

In the following description, for the purposes of explanation, numerous specific details are set forth in order to provide a thorough understanding of the present disclosure. It will be apparent, however, that the present disclosure may be practiced without these specific details. In other instances, well-known structures and devices are shown in block diagram form in order to avoid unnecessarily obscuring the present disclosure.

Embodiments are described herein according to the following outline:
1.0. General Overview
2.0. Hybrid Structure
3.0. Heat and Pressure Optimization
4.0. Example Hybrid Structures
5.0. Subsequent Back-Injection
6.0. Example Embodiments
7.0. Extensions and Alternatives

### 1.0. GENERAL OVERVIEW

Techniques as described herein can be used or implemented to support the integration and shaping/forming of skin layers in a product manufacturing or assembly process including a particle foaming process (or process step) used to produce lightweight, durable parts with improved insulation properties including but not limited to vehicle door panels, dashboards, other vehicle interior or exterior parts, as well as non-vehicle parts in non-vehicle applications.

The final part or product can be relatively easily recyclable as it may be made of synthetic material such as thermoplastic polymer and natural fibers. In some embodiments, the synthetic material such as the thermoplastic polymer used for both skin layer matrix and core structure (layer) in the final part/product is of the same/identical material or materials of the same/identical chemical composition or at least chemically compatible. As used herein, "compatible" may mean that the skin layer and core structure materials may be different chemical compositions so long as they are chemically compatible in the sense that they can be fused with relatively high quality adhesion (but without adhesive present) into final products without generating mechanical or other problems in the applications of the final products or during the recycling process.

The core structure or layer may be fused with at least one skin layer in the final part/product. In some operational scenarios, the core structure may be sandwiched between two skin layers in the final part/product. No adhesive may be needed or used to bond or fuse the skin layer(s) to the core (structure) in the product manufacturing or assembly process as described herein. Instead, the (chemical, thermal and/or physical) compatible nature of the skin layer(s) and the core (structure) enables the individual parts - the skin layer(s) and the core (structure) - of the final part/product such as one with a sandwich structure to bond under heat and pressure.

The (e.g., adhesive-free, etc.) product manufacturing or assembly process as described herein can be used or implemented to produce final fiber-reinforced composite parts/products with (e.g., significantly, 50%, etc.) improved compression and flexural strengths as compared to those without fiber reinforcement such as a part with a mono-material structure made entirely from a single material. Additionally, optionally or alternatively, natural fibers may be used with recyclable synthetic materials to allow the final parts/products made of the synthetic and natural fiber materials free of adhesive material to retain the recyclability.

Hence, different functions or characteristics relating to recyclability, improved mechanical, chemical and/or physical properties or performance may be integrated, realized, supported or enabled in the same product manufacturing or assembly process. The process implements or includes a single particle foaming process step to produce parts/products with hybrid structures such as hybrid (yet recyclable and sustainable/renewable) sandwich structures. As used herein, "hybrid" may refer to the skin and the core structure being two dissimilar material types or compositions or structures with different structural, mechanical, thermal, physical and/or chemical properties or characteristics. In some operational scenarios, skin layers as described herein can be produced in relatively complex geometries (e.g., conforming to a designed shape or net-shape of the final product/part, etc.) prior to the foaming process step to create curved parts/products including but not limited to doubly-curved sandwich parts/products. Additionally, optionally or alternatively, in some operational scenarios, (e.g., relatively flat, etc.) skin layers can be shaped/formed during the foaming process step in a heated tool/mold used to fuse the skin layers with core structures.

Example approaches, techniques, and mechanisms are disclosed for manufacturing (e.g., fiber-reinforced polymer, recycled relatively easily, natural fiber embedded, etc.) composite products. A mixture of a fibrous material and a matrix material is consolidated into skin layers each of which represents an individual skin layer. Portions of a core structure material are injected into a mold in which at least one of the skin layers is placed. The portions of the core structure material are fused with the at least one of the skin layers to create a hybrid structure.

### 2.0. HYBRID STRUCTURE

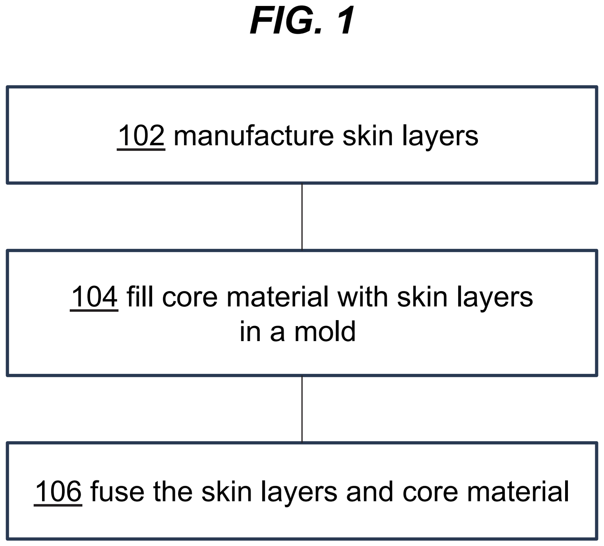

FIG. 1 illustrates an example process flow for producing fiber-reinforced composite (e.g., finished, to be further finished with back-injection, etc.) products, which may be of specific spatial features of final geometries to be used in end-user applications.

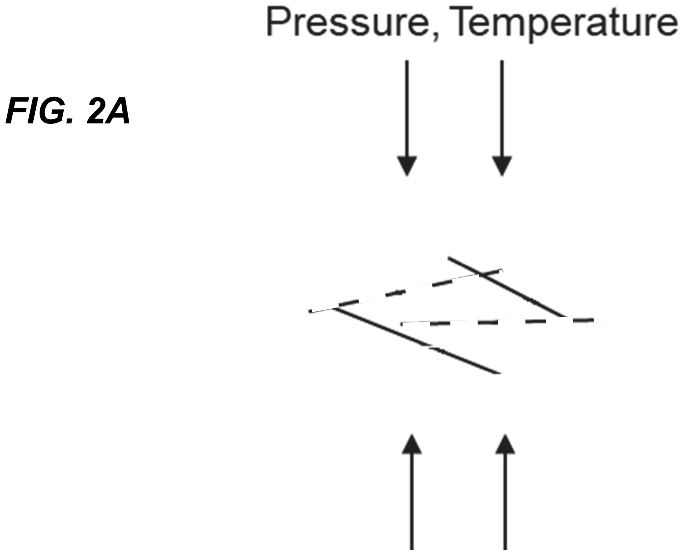

Block 102 comprises manufacturing fiber-reinforced skin layers as follows. As illustrated in FIG. 2A, natural fibers represented as solid black lines such as cellulose fibers derived from plants may be first intermingled with a synthetic matrix material (e.g., in a slurry, in a container, etc.) represented in dashed lines, which may initially - before consolidation under pressure and heat - also in a fiber form. Following the intermingling the fibrous resin may still be fibrous, the hot pressing step herein is where the fibrous resin melts and becomes the matrix of the composite forming the skin layers.

Example synthetic matrix materials as described herein may include, but are not necessarily limited to only, polypropylene (PP), PP fibers, non-PP synthetic materials or fibers, etc.

The matrix material may, but is not necessarily limited to only, include recycled synthetic materials such as recycled polypropylene materials. In addition, the matrix material used to manufacture the skin layers is relatively easily recyclable from finished products containing the skin layers, thanks at least in part to the natural fibers present in the skin layers.

After matrix and reinforce fibers - which may be the natural and synthetic fibers in some operational scenarios - are intermingled, a twin press - which are illustrated as two solid black blocks in FIG. 2A - applies temperature and pressure to consolidate the intermingled natural and synthetic fibers into the skin layers. As a result of the temperature and pressure, the natural fibers are engulfed or fully immersed in the matrix material or a matrix structure thereof.

In some embodiments, block 102 may include using the twin press with a curved tool surface conformal to or curvilinear with an exterior or interior surface (or final geometry) of target finished products - such as those with a target sandwich structure - and compressing the skin layers into the final geometry of the target finished products or the target sandwich structure.

Block 104 comprises joining one or more skin layers with a core structure material while introducing heat and pressure to the skin layers and core structure materials.

The core structure material may include, but is not necessarily limited to only, foam particles initially. Each of the foam particles in the core structure material may have a cell structure forming (e.g., physical, etc.) outer and inner layers. In some operational scenarios, the skin layers may be first placed in tool cavity such as within a mold, and core structure materials such as recycled PP beads are injected next to, or into cavity in between, the skin layers.

The heat intensity and duration (e.g., with specific values, within specific value ranges, etc.) applied to the skin layer and core structure materials in the tool/mold may be controlled to partially melt outside or the outmost layers of the foam particles and the skin layers so that spatially (e.g., immediately, etc.) adjacent partially melted foam particles among the form particles are fused with one another in the core structure(s) as well as partially melted form particles spatially (e.g., immediately, etc.) adjacent to the skin layers are fused to the skin layers.

Block 106 comprises applying pressure and temperature (e.g., with specific values, within specific value ranges, etc.) to the partially melted the core structure material such as foam particles to fuse the material or the foam particles thereof together into core structure(s) as well as fuse the core structure(s) with or to the skin layers. This may be done by carefully setting the molding temperature within a specific (temperature value) range that melts the particle foams or beads constituting the core structure material without causing these particles to collapse and without thermally degrading the natural or cellulose fibers in the skin layers. The collapse mainly depends on the thermal material properties (melting temperature Tm) and the type of cell structure for core (structure) material beads/particles. Here, the type of cell structure may refer to whether a bead/particle (a portion of the core structure material) is an open or closed cell structure. In many operational scenarios, particle foam beads have a closed cell structure. Particle foam beads may be considered as collapsing or collapsed when the temperature (e.g. processing temperature or application temperature, etc.) is or was set too high such that the (e.g., thermally, etc.) expanded volume starts to significantly (e.g., exceeding a relatively small size change threshold such as 3 or 5%, etc.) decrease, as cell walls collapse or tear.

### 3.0. HEAT AND PRESSURE OPTIMIZATION

The particle foam beads in the core structure material may have two different melting temperatures. The lower melting temperature of the two different melting temperatures of the core structure material represents a temperature at which outer or the outermost particle bead layers or skins - which are not the same as the skin layers reinforced with the natural fibers - melts or starts to melt, whereas the higher melting temperature of the two different melting temperatures represents a temperature at which inner or the innermost particle bead layers (or cell structures) melts or starts to melt.

In various embodiments, the inner or innermost layers or cell structure of an individual particle/bead in the core structure material may constitute one of 30%, 40%, 50%, 60% or more of the overall cell structure, volume or material of the particle/bead. The outer or outermost layers or cell structure of the individual particle/bead in the core structure material may constitute the remainder of the overall cell structure, volume or material of the particle/bead.

To achieve target mechanical, physical and/or chemical objectives, properties and/or characteristics in the finished products/parts, an optimized temperature or an optimized temperature subrange that enables the partially melted particles/beads in the core structure material to fuse and eventually bounded with one another and with the skin layers may be specifically designed or selected - e.g., through mathematical, theoretical, chemistry or physics modeling, through experiments, etc. - within the overall range of the two different melting temperatures of the core structure material. Additionally, optionally or alternatively, the optimized temperature or temperature subrange may be specifically selected to enable a specific amount, portion or volume of the outer or outermost layers of the individual particles/beads of the core structure material to be melted to fuse and compressed together to expel (e.g., any, all, except for a relatively small proportion of, etc.) air or bubbles from initial interstitial cavities (or vacancies) among the particles/beads, concurrently while avoiding melting, or maintaining their rigidity of, the inner or innermost layers or cell structures of the particles/beads. After finally forming into a hybrid structure as described herein, air/gaps or an amount thereof may or may not be allowed between the particles depending on the intended or target mechanical performance of the component/part with the hybrid structure as well as how strong the achieved or existing (e.g., inter-particle, etc.) bond between the beads/particles is. In some operational scenarios, it may be sufficient for the beads/particles to be in contact at a single point, if there is a strong cohesive connection there that is sufficient to meet the mechanical characteristics on the (final) component/part level. In many operational scenarios, bead/particle connections or bounds may be sufficient if, in the event of component/part failure, the break happens intra-bead rather than inter-bead, meaning that the joints or bonds between the beads/particles do not fail, but rather the beads/components themselves break.

By way of illustration but not limitation, in the case of polypropylene particle foam beads, the two different melting temperatures may form a temperature range from 135 to 170 °C. The melting temperature of the skin layers may be specifically selected or optimized to be between the two different melting temperatures of the particle foam beads in the core structure material.

Additionally, optionally or alternatively, the matrix polymer of the skin layers intermingled with the natural fibers in manufacturing the skin layers may be specifically designed, chosen or modified with specific mechanical, physical, chemical and/or thermal properties or characteristics accordingly to help ensure the success of the subsequent operations such as the fusing process and help ensure the overall process to produce the finished product/part with designed mechanical, physical, chemical and/or thermal properties or characteristics.

This means that a processing temperature in the range between the two melting temperatures of the particle foam beads can weld the particles/beads together on the one hand and the particles/beads to respective skin layers on the other.

The heat applied to partially melt the skin layer and core structure materials in the tool/mold may be dissipated into the bulk of the materials through convection and conduction. Heating time or duration as well as pressing time or duration for applying the pressure to the partially melted skin layer and core structure materials in the tool/mold in the fusing operation may be specifically selected, determined or selected in a manner that allows for the particles/beads in the core structure material to melt (concurrently) together and fuse and bond relatively effectively and strongly. One or both of the heating time and/or pressing time may be selected based at least in part on the part (or layer) thickness(es) relating to the core structure material and the individual skin layers as well as specific thermal material properties of the core structure and skin layer materials. The pressure applied to the skin layers (e.g., directly, etc.) and the core structure material (e.g., indirectly, etc.) may be optimized or specifically set in a (pressure value) range that provides enough physical contact to build or generate a physical and/or chemical bond - among or between adjacent particles/beads in the core structure materials in the tool/mold as well as between the skin layers and adjacent particles beads in the core structure materials in the tool/mold. The specific or optimized pressure to be applied may be selected based at least in part on thicknesses or sizes (which may be 50 times, 100 times, etc., smaller than the longest dimension size of the products/parts) of the particles/beads in the core structure material and/or of the skin layers. Additionally, optionally or alternatively, the specific or optimized pressure may be (e.g., empirically, through lab studies, through modeling, etc.) selected based at least in part on specific material, structural, mechanical, physical and/or chemical properties or characteristics of the skin layers and the core structure material, including but not necessarily limited to only, inner cell structures and/or sizes of the particles/beads in the core structure layers. Sizes of particles as described herein may depend on the material (type) and can range overall typically from an example range of 1.5 - 10 mm - and may be smaller or larger than the example range such as 12 mm. By way of example but not limitation, expanded polyamide (EPA) typically has a bead size of 1.5 - max 3 mm; expanded polypropylene (EPP) 3 - 6 mm ; extended polyethylene terephthalate (EPET) 4 - 8 mm; expanded thermoplastic polyurethane (ETPU) 6 - 12mm; and so on.

### 4.0. EXAMPLE HYBRID STRUCTURES

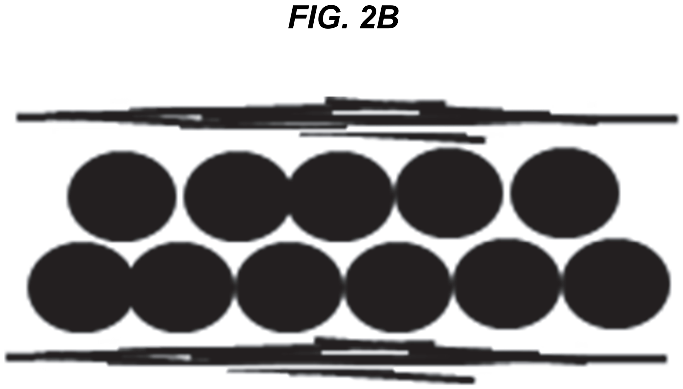

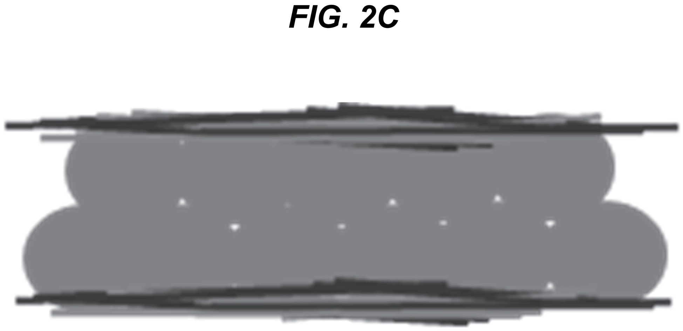

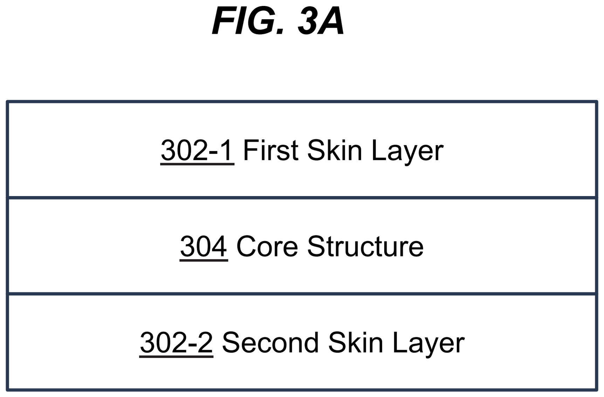

By way of example but not limitation, a finished (e.g., vehicular, non-vehicular, etc.) product/part with a sandwich structure of hybrid fiber-reinforced composite such as illustrated in FIG. 3A is to be manufactured with the process flow of FIG. 1. In block 102 of FIG. 1, two skin layers - a first skin layer 302-1 and a second skin layer 302-2 - may be manufactured. In block 104, as illustrated in FIG. 2B, the two skin layers are placed into a tool or mold, whereas core structure material portions such as foam particles or beads may be injected in between the two skin layers in the tool/mold. In block 106 of FIG. 1, as illustrated in FIG. 2C, the two skin layers and the core structure materials such as foam particles or beads are heated with specific heat intensities and durations to become partially melted. At the same time or subsequently, pressure with specific value(s) or value range(s) is applied to the partially melted the skin layer and core structure materials in the tool/mold to fuse and press the materials into the finished product - composed of the skin layers 302 and the core structure or layer 304 - of a final geometry, for example the same as (e.g., within a relatively small size tolerance, etc.) that of the finished product *in situ* when the final product is, or is to be, deployed in the field or in a target end-user application.

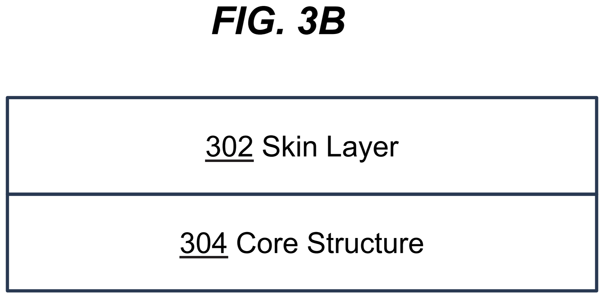

As a comparison, in some embodiment, a finished (e.g., vehicular, non-vehicular, etc.) product/part with a hybrid structure of fiber-reinforced composite such as illustrated in FIG. 3B is to be manufactured with the process flow of FIG. 1. In block 102 of FIG. 1, a skin layer 302 may be manufactured. In block 104 of FIG. 1, the skin layer is placed into a tool or mold, whereas core structure material portions such as foam particles or beads may be injected to one side of the skin layer in the tool/mold. In block 106 of FIG. 1, the skin layer and the core structure materials such as foam particles or beads are heated with specific heat intensities and durations to become partially melted. At the same time or subsequently, pressure with specific value(s) or value range(s) is applied to the partially melted the skin layer and core structure materials in the tool/mold to fuse and press the materials into the finished product - composed of the skin layer 302 and the core structure or layer 304 - with a final geometry, for example the same as (e.g., within a relatively small size tolerance, etc.) that of the finished product *in situ* when the final product is, or is to be, deployed in the field or in a target end-user application.

In various embodiments, other hybrid structures may be produced in finished products using the process flow of FIG. 1. For example, more than three skin layers sandwiching or partially sandwiching core structures may be produced in some embodiments. Additionally, optionally or alternatively, multiple core structures may be incorporated into hybrid structures produced in finished products using the process flow of FIG. 1.

### 5.0. SUBSEQUENT BACK-INJECTION

In some operational scenarios, the part/product such as one with a sandwich structure as produced by the process flow of FIG. 1 can be directly applied as a final finished part/product in the field or end-user operations. In some operational scenarios, the part/product can be further processed or molded in a back-injection process step to add further product features and functions to the part/product. The back-injection molding material to be added to the part/product may be specifically selected to be (e.g., mechanically, physically, chemically, etc.) compatible with the part/product or skin layer(s) therein to achieve sufficient (e.g., mechanical, physical, chemical, etc.) bonding between the back-injection molding material and the part/product produced with the process flow of FIG. 1, for example to ensure recyclability as well as designed (e.g., mechanical, physical, chemical, etc.) properties or characteristics of the further processed part/product.

In some operational scenarios, the process flow of FIG. 1 can be applied or performed to produce parts/products/components each with relatively large (e.g., exterior, etc.) surface area and/or relatively limited geometrical complexity, for example at a relatively efficient and low cost. The press process step (or block 106) of the process flow of FIG. 1 can deform skin layers such as two skin layers and thus generating curved parts/products, for example each with doubly-curved part surfaces. These products/parts can be used in a wide variety of industrial and consumer applications, for example as exterior body panels, interior paneling, vehicle exteriors, etc., especially in commercial vehicle or van applications as well as walls of cargo bays, flooring, roof structures, and so on. Additionally, optionally or alternatively, these parts/products can also be employed as doors, tables and shelving in RV type applications.

As the matrix and core structure materials in fiber reinforced composite parts, products or components - such as polymer (plastic) matrixes with embedded natural fibers acting as reinforcement - are of identical or compatible chemical compositions or types, fusion of these materials in a hybrid structure provide relatively superior mechanical (including but not limited to flexural) strength and thermal stability of the resultant hybrid structure, even without using adhesives.

Relatively easy recyclability - e.g., using relatively simple processes such as schredding and re-compounding - of (e.g., organic, hemp, flax, jute, cotton, sisal, etc.) natural fibers such as cellulose fibers in fiber-reinforced composite part, product or component with hybrid structures as described herein can be used to relatively efficiently recycle synthetic materials - which may or may not be biodegradable themselves - such as thermoplastics used in the same part, product or component, thereby providing a relatively small carbon footprint during production and a greater potential for reuse or recycling. Relatively simple processes may be used in part due to the absence of adhesive materials to separate the natural fibers from the matrix and core structure materials in the part, product or component without excessive energy consumption. Additionally, optionally or alternatively, the natural fibers themselves are renewable and sourced from plants, making them a more sustainable option in the long term.

### 6.0. EXAMPLE EMBODIMENTS

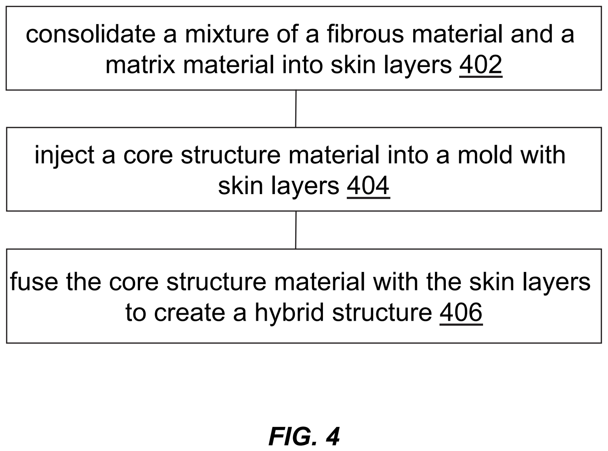

FIG. 4 illustrates an example (e.g., continuous, repeatable, etc.) process flow for producing fiber-reinforced composite products. In block 402, a (e.g., slurry, etc.) mixture of a fibrous material and a matrix material is consolidated into skin layers each of which represents an individual skin layer. In some operational scenarios, the skin layer may be composed of natural fibers constituting the fibrous material in addition to the matrix material made of a (e.g., single, a chemically compatible mix of, etc.) synthetic material. In some operational scenarios, the matrix material may include synthetic fibers.

Intermingled with the matrix material, the fibrous material may be composed of natural fibers such as cellulose fibers, synthetic fibers, or a combination of natural and synthetic fibers. The matrix material may be composite or non-composite material that contains one or more of: polymer, non-polymer, polypropylene, polyurethane, polyester, polyamide and/or resin materials in fiber or non-fiber forms. The individual skin layer may be of a specific spatial shape to be incorporated into a final hybrid structure such as a hybrid sandwich structure. The skin layer may be made of portions of the fibrous material that are distributed evenly, relatively uniformly, with density variations within a tolerance range, etc., in a matrix formed by the matrix material.

To consolidate the fibrous material and the matrix material into a skin layer, pressure may be applied on the mixture of the intermingled fibrous and matrix materials. The pressure application may be preceded at least in part by heating the mixture of the intermingled fibrous and matrix materials at first temperatures. The pressure application may also be followed at least in part by cooling the mixture at second temperatures lower than the first temperatures.

In block 404, portions of a core structure material are injected into a mold in which at least one of the skin layers is placed.

The core structure material may be made of PP or non-PP materials. The core structure material may be fiber co-mingled or fiber-free. In some operational scenarios, two skin layer including the at least one of the skin layers is placed first in the mold. The portions of the core structure materials are then injected into a cavity portion in between the two skin layers.

In block 406, the portions of the core structure material are fused with the at least one of the skin layers to create a hybrid structure.

Pressure may be applied on the partially melted portions of the core structure material. The pressure application may be preceded at least in part by heating the portions of the core structure material at third temperatures. The pressure application may also be followed at least in part by cooling the portions of the core structure material at fourth temperatures lower than the third temperatures.

In an embodiment, the matrix material and the core structure material are composed of an identical chemical material composition.

In an embodiment, the hybrid structure is free of adhesive material or any material other than the fibrous material, the matrix material and the core structure material.

In an embodiment, the portions of the core structure material are in a rigid state before injecting into the mold; a molding temperature in the mold is set within a specific temperature range to partially melt the portions of the core structure material without thermally degrading the fibrous material in the skin layers or causing the portions of the core structure material to collapse.

In an embodiment, the portions of the core structure material have a first melting temperature and a second melting temperature higher than the first melting temperature; outer layers of the portions of the core structure material melts at the first melting temperature; inner cell structures of the portions of the core structure material melts at the second melting temperature; the specific temperature range is set in between the first melting temperature and the second melting temperature.

In an embodiment, the skin layer has a melting temperature between the first and second melting temperatures.

In an embodiment, the portions of the core structure material are composed of polypropylene particle foam beads; wherein the specific temperature range is set in between 135 and 170 °C.

In an embodiment, heat is dissipated through one or both of convection and conduction into one or both of: (a) the mixture of the fibrous material and the matrix material and (b) the mold in which the portions of the core structure material are to be partially melted.

In an embodiment, a specific pressure is applied to the portions of the core structure material and the at least one skin layer in the mold for a specific time duration to fuse the partially melted portions of the core structure material into one another.

In an embodiment, the specific time duration is selected based at least in part on one or more of: a thickness of the at least one skin layer, an individual size of the portions of the core structure material, a thermal material property of the core structure material, etc.

In an embodiment, the specific pressure is selected based at least in part on one or more of: a thickness of the at least one skin layer, an individual size of the portions of the core structure material, an inner structure of the portions of the core structure material, a first material bonding property between two portions of the core structure material in physical contact, or a second material bonding property between the core structure material and the at least one skin layer.

In an embodiment, after heating, pressing and fusing the at least one skin layer and the core structure material into the hybrid structure, a subsequent back-injection molding process step is performed on the hybrid structure to add further features and functions to a finished part including the hybrid structure.

In an embodiment, a back-injection molding material used in the subsequent back-injection molding process step is compatible with the at least one skin layer to achieve sufficient mechanical bonding between the at least one skin layer and the back-injection molding material and to ensure recyclability of the finished part.

In an embodiment, heating, pressing and fusing the at least one skin layer and the core structure material concurrently deform two skin layers including the at least one skin layer into a doubly-curved part.

In an embodiment, the mold contains a cavity in which the at least one skin layer is first placed, follow by particles constituting the core structure material injected to a specific side of the at least one skin layer.

In an embodiment, two skin layers including the at least one skin layer are placed in the cavity of the mold; the injected particles of the core structure material are overfilled in a cavity potion in between the two skin layers in the mold.

In an embodiment, two skin layers including the at least one skin layer are placed in the cavity of the mold; the injected particles of the core structure material are overfilled in a cavity potion in between the two skin layers in the mold.

In an embodiment, a product of a manufacturing process that performs the method as described herein is made.

According to an embodiment, a fiber-reinforced recyclable composite part assembly comprises: natural fibers; a matrix material; a core structure material; a container that contains, heats, presses and consolidates a mixture of the natural fibers and the matrix material into skin layers; a molding tool that has a cavity into which at least one skin layer of the skin layers is placed and into which portions of the core structure material are injected. The molding tool applies heat and pressure to the at least one skin layer and the portions of the core structure material and fuses the portions of the core structure material with the at least one of the skin layers to create a hybrid structure.

In an embodiment, the matrix material and the core structure material are of an identical chemical composition.

Other examples of these and other embodiments are found throughout this disclosure. Note that, although separate embodiments are discussed herein, any combination of embodiments and/or partial embodiments discussed herein may be combined to form further embodiments.

### 7.0. EXTENSIONS AND ALTERNATIVES

As used herein, the terms "first," "second," "certain," and "particular" are used as naming conventions to distinguish queries, plans, representations, steps, objects, devices, or other items from each other, so that these items may be referenced after they have been introduced. Unless otherwise specified herein, the use of these terms does not imply an ordering, timing, or any other characteristic of the referenced items.

In the drawings, the various components are depicted as being communicatively coupled to various other components by arrows. These arrows illustrate only certain examples of information flows between the components. Neither the direction of the arrows nor the lack of arrow lines between certain components should be interpreted as indicating the existence or absence of communication between the certain components themselves. Indeed, each component may feature a suitable communication interface by which the component may become communicatively coupled to other components as needed to accomplish any of the functions described herein.

In the foregoing specification, embodiments of the disclosure have been described with reference to numerous specific details that may vary from implementation to implementation. Thus, the sole and exclusive indicator of what is the disclosure, and is intended by the applicants to be the disclosure, is the set of claims that issue from this application, in the specific form in which such claims issue, including any subsequent correction. In this regard, although specific claim dependencies are set out in the claims of this application, it is to be noted that the features of the dependent claims of this application may be combined as appropriate with the features of other dependent claims and with the features of the independent claims of this application, and not merely according to the specific dependencies recited in the set of claims. Moreover, although separate embodiments are discussed herein, any combination of embodiments and/or partial embodiments discussed herein may be combined to form further embodiments.

Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A method for manufacturing fiber-reinforced composite parts, comprising:
consolidating a mixture of a fibrous material and a matrix material into skin layers each of which represents an individual skin layer made of portions of the fibrous material distributed in a matrix formed by portions of the matrix material;
injecting portions of a core structure material into a mold in which at least one of the skin layers is placed; and
fusing the portions of the core structure material with the at least one of the skin layers to create a part with a hybrid structure.

2. The method of Claim 1, wherein the matrix material and the core structure material are composed of an identical chemical material composition.

3. The method of Claim 1, wherein the hybrid structure is free of adhesive material or any material other than the fibrous material, the matrix material and the core structure material.

4. The method of Claim 1, wherein the portions of the core structure material are in a rigid state before injecting into the mold; wherein a molding temperature in the mold is set within a specific temperature range to partially melt the portions of the core structure material without thermally degrading the fibrous material in the skin layers or causing the portions of the core structure material to collapse.

5. The method of Claim 4, wherein the portions of the core structure material have a first melting temperature and a second melting temperature higher than the first melting temperature; wherein outer layers of the portions of the core structure material melts at the first melting temperature; wherein inner cell structures of the portions of the core structure material melts at the second melting temperature; wherein the specific temperature range is set in between the first melting temperature and the second melting temperature.

6. The method of Claim 5, wherein the skin layer has a melting temperature between the first and second melting temperatures.

7. The method of Claim 1, wherein the portions of the core structure material are composed of polypropylene particle foam beads; wherein the specific temperature range is set in between 135 and 170 °C.

8. The method of Claim 1, wherein heat is dissipated through one or both of convection and conduction into one or both of: (a) the mixture of the fibrous material and the matrix material and (b) the mold in which the portions of the core structure material are to be partially melted.

9. The method of Claim 1, further comprising: applying a specific pressure to the portions of the core structure material and the at least one skin layer in the mold for a specific time duration to fuse the partially melted portions of the core structure material into one another.

10. The method of Claim 9, wherein the specific time duration is selected based at least in part on one or more of: a thickness of the at least one skin layer, an individual size of the portions of the core structure material, or a thermal material property of the core structure material.

11. The method of Claim 9, wherein the specific pressure is selected based at least in part on one or more of: a thickness of the at least one skin layer, an individual size of the portions of the core structure material, an inner structure of the portions of the core structure material, a first material bonding property between two portions of the core structure material in physical contact, or a second material bonding property between the core structure material and the at least one skin layer.

12. The method of Claim 1, further comprising: after heating, pressing and fusing the at least one skin layer and the core structure material into the hybrid structure, performing a subsequent back-injection molding process step on the hybrid structure to add further features and functions to a finished part including the hybrid structure.

13. The method of Claim 12, wherein a back-injection molding material used in the subsequent back-injection molding process step is compatible with the at least one skin layer to achieve sufficient mechanical bonding between the at least one skin layer and the back-injection molding material and to ensure recyclability of the finished part.

14. The method of Claim 1, wherein heating, pressing and fusing the at least one skin layer and the core structure material concurrently deform two skin layers including the at least one skin layer into a doubly-curved part.

15. The method of Claim 1, wherein the mold contains a cavity in which the at least one skin layer is first placed, follow by particles constituting the core structure material injected to a specific side of the at least one skin layer.

16. The method of Claim 15, wherein two skin layers including the at least one skin layer are placed in the cavity of the mold; wherein the injected particles of the core structure material are overfilled in a cavity potion in between the two skin layers in the mold.

17. A product of a manufacturing process that performs the method as recited in Claim 1.

18. A fiber-reinforced recyclable composite part assembly, comprising:
natural fibers;
a matrix material;
a core structure material;
a container that contains, heats, presses and consolidates a mixture of the natural fibers and the matrix material into skin layers;
a molding tool that has a cavity into which at least one skin layer of the skin layers is placed and into which portions of the core structure material are injected;
wherein the molding tool applies heat and pressure to the at least one skin layer and the portions of the core structure material and fuses the portions of the core structure material with the at least one of the skin layers to create a part with a hybrid structure.

19. The fiber-reinforced recyclable composite part assembly of Claim 18, wherein the matrix material and the core structure material are of an identical chemical composition.

20. The fiber-reinforced recyclable composite part assembly of Claim 18, wherein the hybrid structure is free of adhesive material or any material other than the fibrous material, the matrix material and the core structure material.
